# EUROPEAN PATENT APPLICATION

(11) **EP 4 831 827 A1**
(43) Date of publication of application: **28.10.2026**
(21) Application number: 24914874.3
(22) Date of filing: 05.09.2024
(51) Int. Cl.: G06F 16/2455

(54) **DATA PROCESSING METHOD AND DATABASE SYSTEM**

(30) Priority: 02.01.2024 CN 202410008097
(71) Applicant: Huawei Technologies Co., Ltd., Shenzhen, Guangdong 518129 (CN)
(72) Inventor: ZHOU, Zhaoqi, Shenzhen, Guangdong 518129 (CN); FU, Gang, Shenzhen, Guangdong 518129 (CN); WANG, Jiang, Shenzhen, Guangdong 518129 (CN)
(74) Representative: Maiwald GmbH
(86) International application number: PCT/CN2024/117007
(87) International publication number: WO 2025/145652

(57) **Abstract**

A data processing method is provided. The method includes: obtaining a first query and a second query, where the second query is a subquery of the first query, the first query includes a first predicate condition, the second query includes a second predicate condition, and if predicate distribution conditions in the parent query and the subquery are consistent, the predicate condition in the parent query may be pushed down to the subquery to obtain a third query; and sending the third query to a data node. This can improve query performance.

## Description

This application claims priority to Chinese Patent Application No. 202410008097.4, filed with the China National Intellectual Property Administration on January 2, 2024 and entitled "DATA PROCESSING METHOD AND DATABASE SYSTEM", which is incorporated herein by reference in its entirety.

### TECHNICAL FIELD

This application relates to the field of database technologies, and specifically, to a data processing method and apparatus, and a database system.

### BACKGROUND

A distributed database is a logically unified database formed by connecting a plurality of physically dispersed database units through a computer network. Each connected database unit is referred to as a site or node.

In a distributed database system, a base table of a subquery and a base table of a parent query are distributed on a plurality of data nodes DNs. In the conventional technology, for the subquery, all base table data is scanned during execution and passed to an upper-level operator, and predicate condition filtering is performed. Finally, results of the subquery and the parent query are returned to a CN, and the CN returns an aggregation result to a user.

However, in the conventional technology, for the subquery, all data in the base table in the subquery needs to be scanned and passed to the upper-level operator, and a predicate condition filtering operation is performed only after the data is passed through a plurality of levels of operators. When a data amount is very large, overheads of broadcasting data are very high, and the operator needs to process a large amount of data, consuming a large quantity of resources and affecting query performance.

### SUMMARY

According to a first aspect, this application provides a data processing method. The method includes: obtaining a first query and a second query, where the second query is a subquery of the first query, the first query includes a first predicate condition, the second query includes a second predicate condition, the first predicate condition indicates data, in a first data range of a first table, that meets a first constraint, the second predicate condition indicates data, in a second data range of a second table, whose relationship with data in the first data range meets a second constraint, and each of the first data range and the second data range corresponds to a distribution key in the table; obtaining a third query based on the first query and the second query, where the third query includes a third predicate condition, the third predicate condition indicates data, in the second data range of the second table, whose relationship with data in a third data range of the first table meets the second constraint, and the data in the third data range is data, in the first data range, that meets the first constraint; and sending the third query to a data node on which the second table is deployed.

In this embodiment of this application, in a distributed database, for a query, if the query includes a subquery, and predicate distribution conditions in the parent query and the subquery are consistent, the predicate condition in the parent query may be pushed down to the subquery, to reduce an amount of data processed in the subquery, thereby improving query performance.

The predicate condition in the first query serving as the parent query is a constraint (namely, the first constraint in this embodiment of this application) on a data area (the first data range) in which a distribution key in the first table is located. The constraint may indicate which data in the data area in which the distribution key in the first table is located needs to be queried in the parent query.

The predicate condition in the second query serving as the subquery is a constraint (namely, the second constraint in this embodiment of this application) on a data area (the second data range) in which a distribution key in the second table is located. The second constraint may indicate which data in the data area in which the distribution key in the second table is located needs to be queried in the subquery, and the second constraint is related to the distribution key indicated by the predicate condition in the first query, that is, the second predicate condition indicates the data, in the second data range of the second table, whose relationship with the data in the first data range meets the second constraint.

In the parent query, there is the first constraint on the data area in which the distribution key in the first table is located, and the second constraint in the subquery is related to the data area in which the distribution key in the first table is located. In a final query result, the predicate condition in the parent query needs to be met. Therefore, the first constraint may be directly pushed down to the subquery, that is, the first constraint (namely, the third query in this embodiment of this application) is directly added to content, in the subquery, that is related to the data area in which the distribution key in the first table is located, thereby greatly reducing a quantity scanned by the data node.

In a possible implementation, the first constraint indicates data, in the first data range of the first table, that is equal to a preset constant, for example, data, in a column a in the first table, that is equal to 1. In this case, that "the third predicate condition indicates the data, in the second data range of the second table, whose relationship with the data in the third data range of the first table meets the second constraint" may be understood as that "the third predicate condition indicates data, in the second data range of the second table, that meets the first constraint, namely, data that is equal to the preset constant".

In a possible implementation, the third predicate condition indicates data, in the second data range of the second table, that is equal to a preset constant, and the condition "equal to the preset constant" is specified in a direct or indirect parent query of the second query. "The indirect parent query is a deep relationship between a subquery and a parent query when the parent query includes a plurality of levels of nested subqueries".

In a possible implementation, the third query does not include the first query.

That is, the third query is obtained by pushing down the first constraint in the first query to the second query, instead of by completely merging the first query and the second query.

In a possible implementation, the first query is a subquery of a fourth query, the fourth query includes a fourth predicate condition, and the fourth predicate condition indicates data, in a fourth data range of a third table, that meets a third constraint.

In a possible implementation, the obtaining the third query based on the first query and the second query includes:
obtaining the third query based on obtained indication information, the first query, and the second query, where the indication information indicates to push down the first predicate condition to the second predicate condition included in the second query.

In a possible implementation, the method further includes:
receiving data, in the second table, that is passed by the data node based on the third query.

In a possible implementation, the first data range is a column in the first table, and the second data range is a column in the second table.

According to a second aspect, this application provides a database system, including a coordinator node and a data node.

The coordinator node is configured to perform the method in any possible implementation of the first aspect.

The data node is configured to: scan a second table based on a third query, to obtain data in the second table; and
pass the data in the second table to the coordinator node.

According to a third aspect, this application provides a data processing apparatus. The apparatus includes:
a transceiver module, configured to obtain a first query and a second query, where the second query is a subquery of the first query, the first query includes a first predicate condition, the second query includes a second predicate condition, the first predicate condition indicates data, in a first data range of a first table, that meets a first constraint, the second predicate condition indicates data, in a second data range of a second table, whose relationship with data in the first data range meets a second constraint, and each of the first data range and the second data range corresponds to a distribution key in the table; and
a processing module, configured to obtain a third query based on the first query and the second query, where the third query includes a third predicate condition, the third predicate condition indicates data, in the second data range of the second table, whose relationship with data in a third data range of the first table meets the second constraint, and the data in the third data range is data, in the first data range, that meets the first constraint.

The transceiver module is further configured to send the third query to a data node on which the second table is deployed.

In a possible implementation, the first constraint indicates data, in the first data range of the first table, that is equal to a preset constant.

In a possible implementation, the third query does not include the first query.

In a possible implementation, the first query is a subquery of a fourth query, the fourth query includes a fourth predicate condition, and the fourth predicate condition indicates data, in a fourth data range of a third table, that meets a third constraint.

In a possible implementation, the processing module is specifically configured to:
obtain the third query based on obtained indication information, the first query, and the second query, where the indication information indicates to push down the first predicate condition to the second predicate condition included in the second query.

In a possible implementation, the transceiver module is further configured to:
receive data, in the second table, that is passed by the data node based on the third query.

In a possible implementation, the first data range is a column in the first table, and the second data range is a column in the second table.

According to a fourth aspect of this application, a data processing apparatus is provided. The apparatus may include at least one processor, a storage, and a communication interface. The processor is coupled to the storage and the communication interface. The storage is configured to store instructions, the processor is configured to execute the instructions, and the communication interface is configured to communicate with another network element under control of the processor. When the instructions are executed by the processor, the processor is enabled to perform the method in any possible implementation of the first aspect.

According to a fifth aspect of this application, a computer-readable storage medium is provided. The computer-readable storage medium stores a program. The program enables a processor to perform the data processing method in any one of the first aspect and the implementations of the first aspect.

According to a sixth aspect of this application, a computer program product is provided. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, to enable the device to implement the method provided in the first aspect or any possible implementation of the first aspect.

According to a seventh aspect of this application, a chip system is provided. The chip system includes a processor, configured to support a data processing apparatus in implementing a function in the first aspect or any possible implementation of the first aspect. In a possible design, the chip system may further include a storage. The storage is configured to store program instructions and data that are necessary for a transaction management apparatus. The chip system may include a chip, or may include a chip and another discrete device.

### BRIEF DESCRIPTION OF DRAWINGS

FIG. 1A to FIG. 1D are diagrams of an application framework according to this application;
FIG. 2A and FIG. 2B are diagrams of an application framework according to this application;
FIG. 3 is a schematic flowchart of a data processing method according to an embodiment of this application;
FIG. 4, FIG. 6, FIG. 8, and FIG. 10 are diagrams of a base table according to an embodiment of this application;
FIG. 5, FIG. 7, FIG. 9, and FIG. 11 are diagrams of an execution plan according to an embodiment of this application;
FIG. 12 is a schematic flowchart of a data processing method according to an embodiment of this application; and
FIG. 13 to FIG. 15 are diagrams of a structure of a data processing apparatus according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that with development of technologies and emergence of a new scenario, technical solutions provided in embodiments of this application are also applicable to a similar technical problem.

The terms "first", "second", and the like in the specification, the claims, and the accompanying drawings of this application are used to distinguish between similar objects, and are not necessarily used to describe a specific order or sequence. It should be understood that data used in this way is interchangeable in appropriate situations, so that embodiments described herein can be implemented in an order other than that illustrated or described herein. In addition, the terms "include" and "have" and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

For ease of understanding, the following first describes related terms in embodiments of this application.

Distributed database: The distributed database is a logically unified database formed by connecting a plurality of physically dispersed database units through a computer network. Each connected database unit is referred to as a site or node.

Key-value database (Key-value database): The key-value database or a key-value store is a data storage paradigm designed to store, retrieve, and manage associative arrays. An associative array is a data structure now more commonly referred to as a "dictionary" or a hash table. The dictionary includes a collection of objects or records. Each record includes a plurality of different "domains" or fields, and each field includes data. These records are stored and retrieved by using a "key" that uniquely identifies each record, and the key is further used to quickly locate data in the database.

Base table: The base table is a table. The table (TABLE) is an object used to store data in a database, is a collection of structured data, and is a foundation of an entire database system. The table is a database object that includes all data in the database. The table is defined as a set of columns.

Index: The index is an ordered data structure in a database management system to assist in quickly querying and updating data in a database table.

NULL value: The null value is a special marker used in a structured query language, is an identifier for unknown or missing data attributes, and indicates an uncertain value in a database. The null value is introduced by E.F. Codd, the creator of relational database models. An SQL null value is used to meet a requirement of a real relational database management system (RDBMS) for supporting "missing information and inapplicable information".

Primary key (PRIMARY KEY): A table often includes one column or a combination of a plurality of columns. A value of the column or the combination of columns can uniquely identify each row in the table. Such a column or columns are referred to as a primary key of the table, and are used to enforce entity integrity of the table. When the table is created or modified, the primary key may be created by defining a PRIMARY KEY constraint. One table can have only one PRIMARY KEY constraint, and a column in the PRIMARY KEY constraint cannot accept a NULL value. The PRIMARY KEY constraint ensures data uniqueness, and therefore is often used to define identity columns.

Distribution key: In a distributed database, the distribution key is a column (or a combination of a plurality of columns) used to determine a database partition for storing a specific data row.

Subquery: The subquery is a SELECT query that returns a single value and is nested in a SELECT, INSERT, UPDATE, or DELETE statement, or another subquery. An upper-level query block is a parent query. Subqueries may be nested at a plurality of levels.

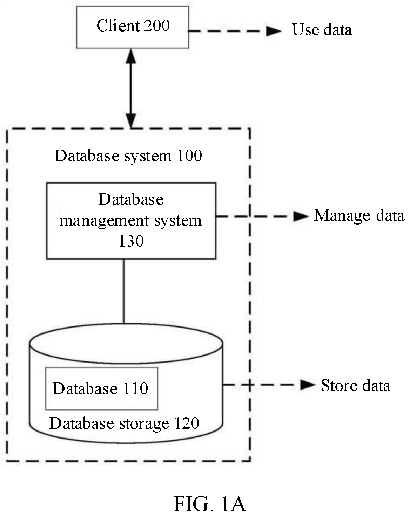

The method provided in embodiments of this application may be applied to a database system (database system). FIG. 1A shows a typical logical architecture of a database system. Based on FIG. 1A, the database system 100 includes a database 110 and a database management system (database management system, DBMS) 130.

The database 110 is an organized data set stored in a data storage (data storage) 120, that is, a collection of associated data organized, stored, and used based on a specific data model. Depending on the data model used for organizing data, the data may be classified into a plurality of types, for example, relational data (relational data), graph (graph) data, and time series (time series) data. The relational data is data modeled by using a relational model, and is usually represented as a table. A row in the table represents a set of associated values of an object or entity. The graph data, referred to simply as a "graph", represents a relationship, for example, a social relationship, between objects or entities. The time series data is briefly referred to as time series data, is a data column recorded and indexed in a time sequence, and is used to describe status change information of an object in a time dimension.

The database management system 130 is a core of the database system, and is system software used to organize, store, and maintain data. A client 200 may access the database 110 through the database management system 130, and a database administrator maintains the database through the database management system. The database management system 130 provides a plurality of functions for the client 200 to establish, modify, and query the database. The client 200 may be an application program or user equipment. The functions provided by the database management system 130 may include but are not limited to the following items: (1) Data definition function: The database management system 130 provides a data definition language (data definition language, DDL) to define a structure of the database 110, where the DDL is used to depict a database framework, and may be stored in a data dictionary. (2) Data access function: The database management system 130 provides a data manipulation language (data manipulation language, DML) to implement basic access operations on the database 110, for example, retrieval, insertion, modification, and deletion. (3) Database operation management function: The database management system 130 provides a data control function to effectively control and manage operation of the database 110, to ensure correct and effective data. (4) Database establishment and maintenance functions: Functions such as loading of initial data of the database, dump, restoration, and reorganization of the database, and monitoring and analysis of system performance are included. (5) Transmission of the database: The database management system provides transmission of processed data, to implement communication between the client and the database management system. This is usually completed through coordination with an operating system.

The data storage 120 includes but is not limited to a solid-state drive (solid-state drive, SSD), a disk array, a cloud storage, or another type of non-transitory computer-readable storage medium. A person skilled in the art may understand that a database system may include components more or fewer than those shown in FIG. 1A, or include components different from those shown in FIG. 1A. FIG. 1A merely shows components more related to implementations disclosed in embodiments of the present invention.

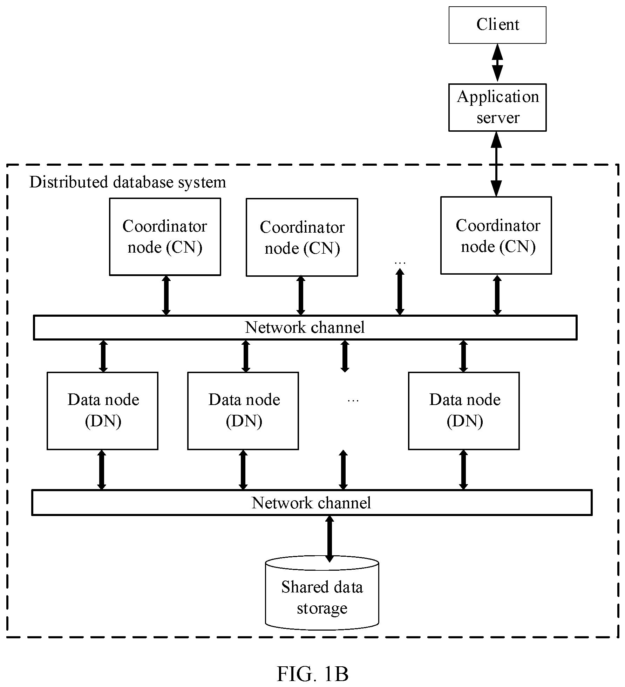

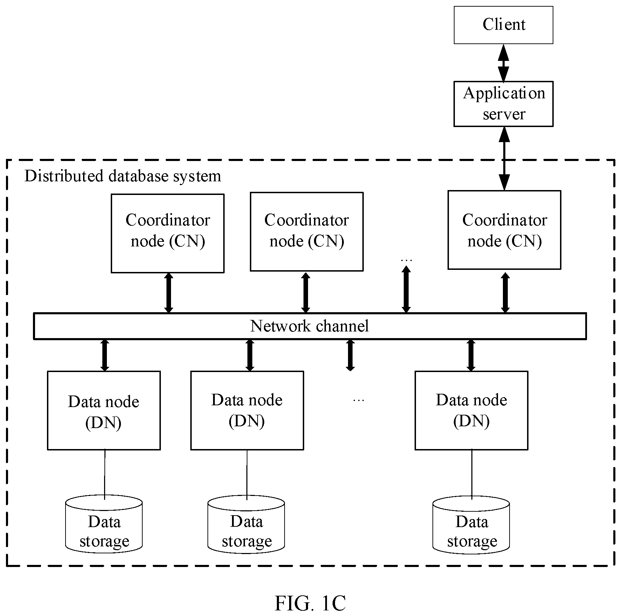

The database system provided in embodiments of this application may be a distributed database system (distributed database system, DDBS). To implement concurrency control among transactions in a transaction processing process, the DDBS usually uses a global transaction manager (global transaction manager, GTM) to manage transactions. The following describes the DDBS with reference to FIG. 1B and FIG. 1C.

FIG. 1B is a diagram of a distributed database system using a shared-storage (shared-storage) architecture, including one or more coordinator nodes (coordinator nodes, CNs), a plurality of data nodes (data nodes, DNs), and one or more GTMs (for example, a first GTM and a second GTM in FIG. 1B). The first GTM serves as a primary GTM. The second GTM is configured to back up data of the first GTM, and takes over work of the first GTM when the first GTM is faulty. In this way, high reliability of the DDBS can be ensured. The CN and the DN communicate with each other through a network channel. In an embodiment, the network channel may include network devices such as a switch, a router, and a gateway. The CN, the DN, and the GTM jointly implement functions of a database management system and provide services such as database retrieval, insertion, modification, and deletion to a client. In an embodiment, a database management system is deployed on each CN, DN, and GTM. A shared data storage stores data that can be shared by a plurality of DNs. The DN may perform a read/write operation on data in the data storage through a network channel. The shared data storage may be a shared disk array. The CN, the DN, the first GTM, or the second GTM in the distributed database system may be a physical machine, for example, a database server, or may be a virtual machine (virtual machine, VM) or a container (container) running on an abstract hardware resource. In an embodiment, the CN, the DN, the first GTM, or the second GTM is a virtual machine or a container, the network channel is a virtual switched network, and the virtual switched network includes a virtual switch. A database management system deployed in the CN, the DN, the first GTM, or the second GTM is a DBMS instance (instance). The DBMS instance may be a process or a thread. These DBMSs cooperate to complete the functions of the relational database system. In another embodiment, the CN, the DN, the first GTM, or the second GTM is a physical machine, the network channel includes one or more switches, and the switch is a storage area network (storage area network, SAN) switch, an Ethernet switch, a fiber switch, or another physical switching device.

FIG. 1C is a diagram of a distributed database system using a shared-nothing (shared-nothing) architecture. Each DN has a dedicated hardware resource (for example, a data storage), an operating system, and a database. A CN, the DN, a first GTM, or a second GTM communicates through a network channel. For understanding of the network channel, refer to the corresponding descriptions in FIG. 1B. In the system, data is allocated to each DN based on a database model and an application characteristic. A query task is divided by the CN into several parts for parallel execution on all the DNs, which coordinately perform calculation and are used as a whole to provide a database service. All communication functions are implemented on a high-bandwidth network interconnection system. Like the distributed database system of the shared-storage architecture described in FIG. 1B, the CN, the DN, the first GTM, or the second GTM herein may be a physical machine or a virtual machine.

In all embodiments of this application, the data storage (data storage) in the database system includes but is not limited to a solid-state drive (solid-state drive, SSD), a disk array, or another type of non-transitory computer-readable medium. Although no database is shown in FIG. 1B and FIG. 1C, it should be understood that the database is stored in the data storage. A person skilled in the art may understand that a database system may include components more or fewer than those shown in FIG. 1A to FIG. 1C, or include components different from those shown in FIG. 1A to FIG. 1C. FIG. 1A to FIG. 1C merely show components more related to implementations disclosed in embodiments of this application. However, a person skilled in the art may understand that a distributed database system may include any quantities of CNs and DNs. Database management system functions of each CN and DN may be separately implemented by using an appropriate combination of software, hardware, and/or firmware on each CN and DN.

The distributed database systems described in FIG. 1B and FIG. 1C include a plurality of DNs and a plurality of CNs. Functions of all the DNs are basically the same, and functions of all the CNs are also basically the same.

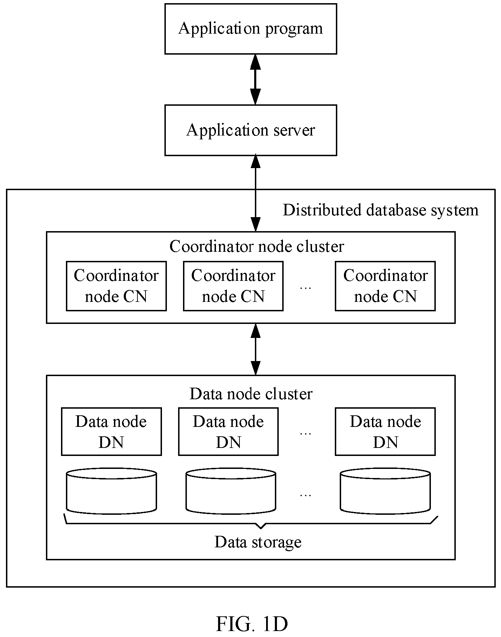

FIG. 1D shows an application program data management system according to an embodiment of this application. Specifically, as shown in the figure, a data node cluster may include a plurality of data nodes DNs. An application program developer may deploy related data of a developed application program in a corresponding data node DN. The application program may send a service request to an application server. The application server may convert the service request into a data operation request, and the application server may send the data operation request to a distributed database system. Then, one or more data nodes DNs in the distributed database system perform an operation corresponding to the operation request on data in a database storage. Specifically, the application server may send the data operation request to a coordinator node in a coordinator node cluster. The coordinator node then forwards the operation request to a related DN, and the related DN performs a data operation corresponding to the operation request.

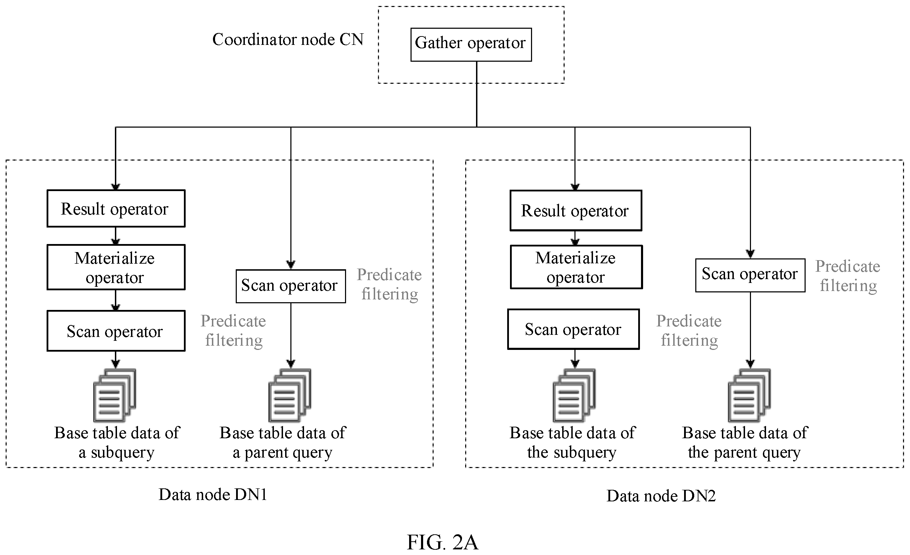

FIG. 2A is a diagram of a system architecture according to an embodiment of this application. The system architecture includes one or more coordinator nodes (CNs) and a plurality of data nodes (DNs). The CN receives an SQL statement, with a subquery, sent by a user, generates an execution plan for predicate pushdown based on distribution information in a parent query and the subquery in the query statement, and delivers the plan to the data node DN. On the DN, for the subquery, when base table data is scanned, a predicate condition filtering operation is synchronously performed, and only data that meets a predicate condition is passed to an upper-level operator. The same applies to the parent query. Finally, the DN returns the data to a Gather operator of the CN. After receiving the data, the CN returns a result to the user.

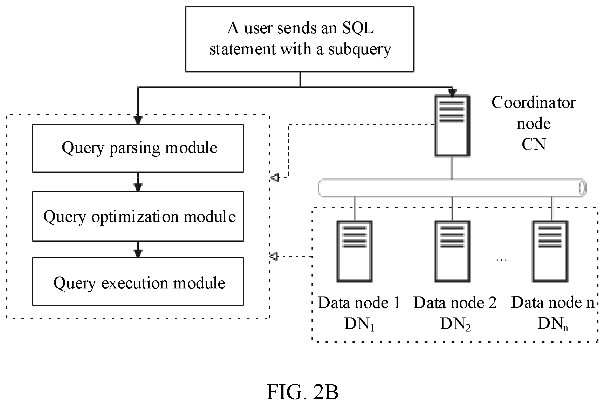

FIG. 2B is a diagram of a system architecture according to an embodiment of this application. This application may be program code included in a distributed database and deployed on a server. An application scenario shown in FIG. 2B is used as an example. The program code of this application exists within database parsers, optimizers, and executors of a coordinator node CN and a data node DN in the distributed database. Base table data is stored on different DNs based on a distribution key in a base table by using a distribution algorithm. As shown in FIG. 2B, a user sends an SQL statement with a subquery on the CN. The CN is responsible for parsing and checking the statement entered by the user, generating an execution plan, connecting to the DN through a network, sending data and instructions to the DN, and finally summarizing statistical information from the DN. The DN is responsible for a specific execution plan execution process. Except for different stored data, all DNs do not differ in architecture and support various data distribution manners. The CN may be selected by using an election algorithm or use a different architecture from the DN. There may be a plurality of CNs based on specific deployment of the distributed database. Modules in the database are evenly deployed on the CN and each DN, and a role assumed by a node in the distributed database is set by using a configuration file.

A distributed database is a logically unified database formed by connecting a plurality of physically dispersed database units through a computer network. Each connected database unit is referred to as a site or node.

In a distributed database system, a base table of a subquery and a base table of a parent query are distributed on a plurality of data nodes DNs. In the conventional technology, for the subquery, all base table data is scanned during execution and passed to an upper-level operator, and predicate condition filtering is performed. Finally, results of the subquery and the parent query are returned to a CN, and the CN returns an aggregation result to a user.

In the conventional technology, a Broadcast Broadcast operator is used. A function of this operator is to broadcast data on a current data node to all data nodes, and then perform a subsequent operation. This operator needs to be used in a scenario in which a predicate condition is inconsistent with a distribution key in a base table. For example, a table t1 includes two columns a and b, with data distributed in the column a, and a table t2 includes two columns, with data distributed in a column b. Each of the two tables includes two rows of data [1, 3] and [2, 4]. All data in the table t1 is on DN1, and all data in the table t2 is on DN2. In this case, for the following query statement: select t1.b, (select t2.b from t2 where t2.a=t1.a) from t1, this statement includes a subquery, and the subquery returns a value in the column b in data in which a value in a column a in the table t2 is the same as that in the column a in the table t1 in the parent query. When this query is executed on a data node, if broadcast is not performed, matched data cannot be found in the data node because the data in the table t1 and the data in the table t2 are distributed on different data nodes. Therefore, a returned result is empty, which is an incorrect result. After the Broadcast operator is added, data on each data node is broadcast to other data nodes. Then, the matched data can be found during predicate filtering, and a correct result is returned.

However, in the conventional technology, for the subquery, all data in the base table in the subquery needs to be scanned and passed to the upper-level operator, and a predicate condition filtering operation is performed only after the data is passed through a plurality of levels of operators. When a data amount is very large, overheads of broadcasting data are very high, and the operator needs to process a large amount of data, consuming a large quantity of resources and affecting query performance.

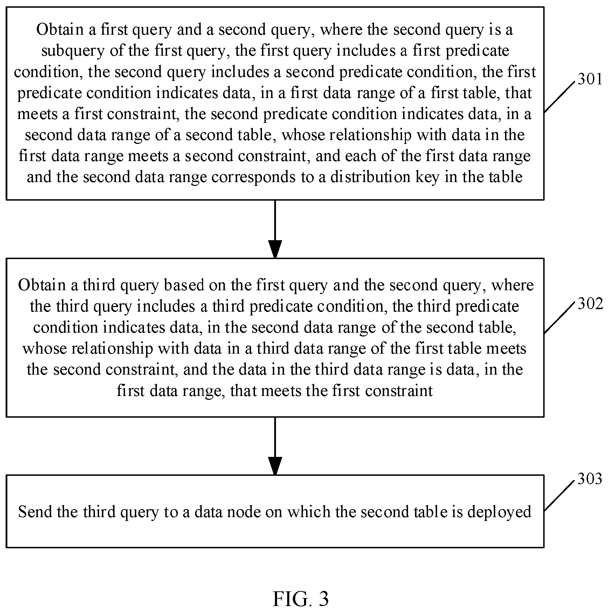

To resolve the foregoing problem, an embodiment of this application provides a data processing method. FIG. 3 is a schematic flowchart of a data processing method according to an embodiment of this application. The method includes the following steps.

301: Obtain a first query and a second query, where the second query is a subquery of the first query, the first query includes a first predicate condition, the second query includes a second predicate condition, the first predicate condition indicates data, in a first data range of a first table, that meets a first constraint, the second predicate condition indicates data, in a second data range of a second table, whose relationship with data in the first data range meets a second constraint, and each of the first data range and the second data range corresponds to a distribution key in the table.

302: Obtain a third query based on the first query and the second query, where the third query includes a third predicate condition, the third predicate condition indicates data, in the second data range of the second table, whose relationship with data in a third data range of the first table meets the second constraint, and the data in the third data range is data, in the first data range, that meets the first constraint.

In a possible implementation, a user may send a query statement (for example, an SQL statement) with a subquery to a coordinator node CN. The query statement may include the first query and the second query. The second query is a subquery of the first query.

For example, the query statement includes a single-level subquery, that is, a parent query (a query A) includes a subquery (a query B). The second query may be the query B, and the first query may be the query A.

For example, the query statement includes a multi-level subquery, that is, a subquery (a query B) of a parent query (a query A) further includes a subquery (a query C). The second query may be the query B, and the first query may be the query A. Alternatively, the second query may be the query C, the first query may be the query B, and a fourth query may be the query A.

For example, the query statement includes two single-level subqueries, that is, a parent query (a query A) includes a subquery (a query B) and a subquery (a query C). The second query may be the query B, and the first query may be the query A. Alternatively, the second query may be the query C, and the first query may be the query A.

For example, the query statement includes two multi-level subqueries, that is, a parent query (a query A) includes a subquery (a query B) and a subquery (a query C), the subquery (the query B) may further include a subquery, and the subquery (the query C) may further include a subquery.

In this embodiment of this application, if the query includes a subquery, and predicate distribution conditions in the parent query and the subquery are consistent, the predicate condition in the parent query may be pushed down to the subquery, to reduce an amount of data processed in the subquery, thereby improving query performance.

The predicate condition in the first query serving as the parent query is a constraint (namely, the first constraint in this embodiment of this application) on a data area (the first data range) in which a distribution key in the first table is located. The constraint may indicate which data in the data area in which the distribution key in the first table is located needs to be queried in the parent query.

The predicate condition in the second query serving as the subquery is a constraint (namely, the second constraint in this embodiment of this application) on a data area (the second data range) in which a distribution key in the second table is located. The second constraint may indicate which data in the data area in which the distribution key in the second table is located needs to be queried in the subquery, and the second constraint is related to the distribution key indicated by the predicate condition in the first query, that is, the second predicate condition indicates the data, in the second data range of the second table, whose relationship with the data in the first data range meets the second constraint.

In the parent query, there is the first constraint on the data area in which the distribution key in the first table is located, and the second constraint in the subquery is related to the data area in which the distribution key in the first table is located. In a final query result, the predicate condition in the parent query needs to be met. Therefore, the first constraint may be directly pushed down to the subquery, that is, the first constraint (namely, the third query in this embodiment of this application) is directly added to content, in the subquery, that is related to the data area in which the distribution key in the first table is located, thereby greatly reducing a quantity scanned by a data node.

For example, a base table t1 includes a total of two columns a and b, and the column a is a distribution key in the table t1. A base table t2 includes a total of two columns a and b, and the column a is a distribution key in the table t2. Semantics of a parent query is to obtain, from the table t1, a value in the column b in data in which a value in the column a is 1, and semantics of a subquery is to obtain, from the table t2, a value in the column b in data in which a value in the column a is the same as the value in the column a in the table t1 in the parent query. In the parent query, there is already a constraint "the value in the column a is 1" on the column a in the table t1. Therefore, the semantics of the subquery may be directly modified to "obtain a value in the column b in data in which a value in the column a is 1 from the table t2".

The following provides several application scenarios.

### 1. Single single-level subquery

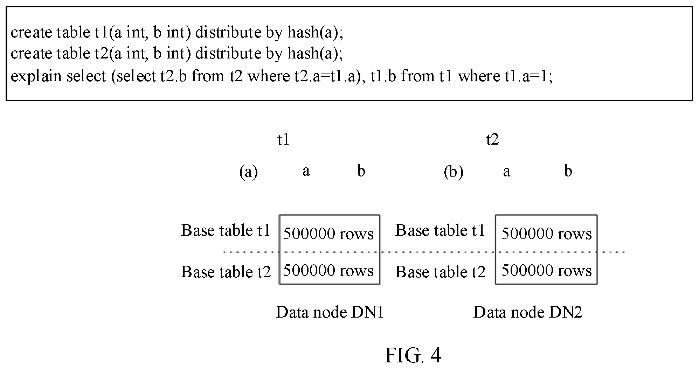

A definition of a base table schema used in Embodiment 1 may be shown in FIG. 4, and two base tables t1 and t2 are included in the example. The base table t1 includes a total of two columns a and b, and the column a is a distribution key in the table t1. The base table t2 includes a total of two columns a and b, and the column a is a distribution key in the table t2. Each of the base table t1 and the base table t2 includes 1000000 rows of data, distributed on two data nodes DN1 and DN2, with 500000 rows of data on each data node. A used query statement includes a single-level subquery. Semantics of a parent query statement is to obtain, from the table t1, a value in the column b in data in which a value in the column a is 1, and semantics of the subquery is to obtain, from the table t2, a value in the column b in data in which a value in the column a is the same as the value in the column a in the table t1 in the parent query.

When a database optimizer generates an execution plan before subquery parameter passing is used, for the subquery, a Seq Scan operator is first used to perform a full table scan on t2, and then a Broadcast operator is used to send scanned data to all data nodes DNs. After each DN receives the data, a Materialize operator stores the data in a memory, and finally a Result operator performs a predicate filtering operation. Because all data in the table t2 needs to be passed to an upper-level operator, a large quantity of resources are consumed, resulting in very low execution plan efficiency.

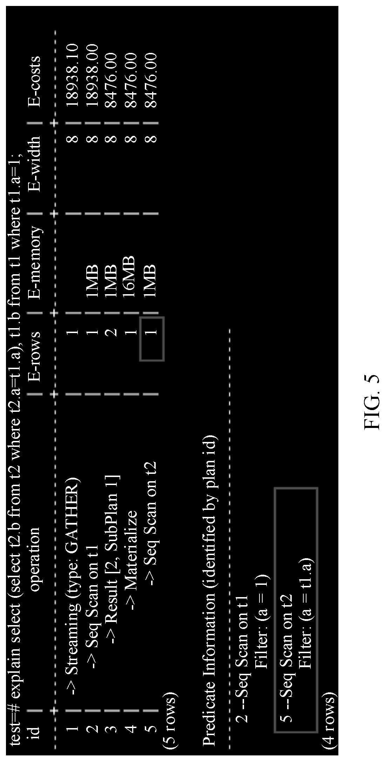

Both a predicate condition in the subquery and a predicate condition in the parent query are the column a, and are consistent with the distribution key in the base table. Therefore, the predicate condition in the parent query may be pushed down to the subquery. An execution plan generated by the database optimizer after subquery parameter passing is used is shown in FIG. 5. For the subquery, in a process in which the table t2 is scanned by using the Seq Scan operator, the predicate filtering operation is synchronously performed, and only data that meets the predicate condition is passed to the upper-level operator. In this way, an amount of data processed by the upper-level operator is one piece of data. Compared with those for the 1000000 pieces of data, occupied resources are greatly reduced, thereby greatly improving execution performance.

### 2. Multi-level subquery

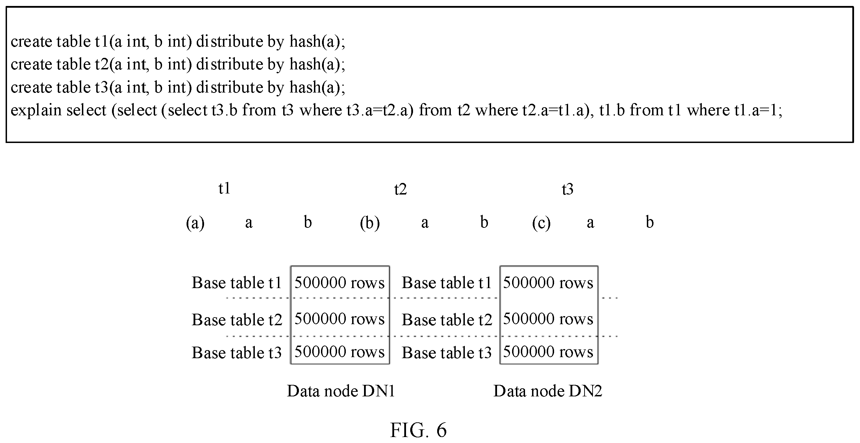

A definition of a base table schema may be shown in FIG. 6, and three base tables t1, t2, and t3 are included in the example. The base table t1 includes a total of two columns a and b, and the column a is a distribution key in the table t1. The base table t2 includes a total of two columns a and b, and the column a is a distribution key in the table t2. The base table t3 includes a total of two columns a and b, and the column a is a distribution key in the table t3. Each of the three base tables includes 1000000 rows of data, distributed on two data nodes DN1 and DN2, with 500000 rows of data on each data node. A used query statement includes a multi-level subquery, that is, the subquery further includes a subquery. Semantics of a parent query statement is to obtain, from the table t1, a value in the column b in data in which a value in the column a is 1, semantics of a first-level subquery is to obtain, from the table t2, data in which a value in the column a is the same as the value in the column a in the table t1 in the parent query, and semantics of a second-level subquery is to obtain, from the table t3, a value in the column b in data in which a value in the column a is the same as the value in the column a in the table t2 in the first-level subquery.

When a database optimizer generates an execution plan before subquery parameter passing is used, for the second-level subquery, a Seq Scan operator is first used to perform a full table scan on t3, and then a Broadcast operator is used to send scanned data to all data nodes DNs. After each DN receives the data, a Materialize operator stores the data in a memory, and finally a Result operator performs a predicate filtering operation. The same applies to the table t2 in the first-level subquery. Because all data in the tables t2 and t3 needs to be passed to an upper-level operator, a large quantity of resources are consumed, resulting in very low execution plan efficiency.

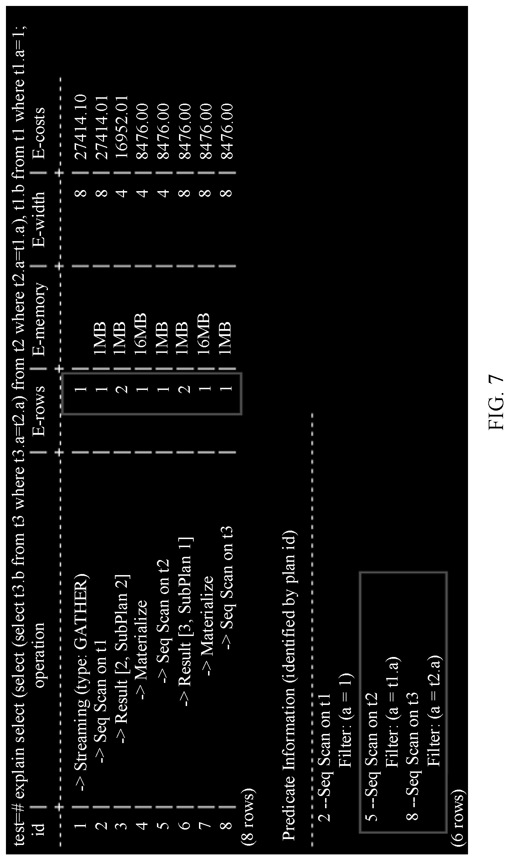

It should be noted that all of predicate conditions in the second-level subquery and the first-level subquery and a predicate condition in the parent query are the column a, and are consistent with the distribution key in the base table. Therefore, the predicate condition in the parent query may be pushed down to the subquery. An execution plan generated by the database optimizer after subquery parameter passing is used is shown in FIG. 7. For the second-level subquery, in a process in which the table t3 is scanned by using the Seq Scan operator, the predicate filtering operation is synchronously performed, and only data that meets the predicate condition is passed to the upper-level operator. The same applies to the table t2 in the first-level subquery. In this way, an amount of data processed by the upper-level operator is one piece of data. Compared with those for the 1000000 pieces of data, occupied resources are greatly reduced, thereby greatly improving execution performance.

### 3. Two single-level subqueries

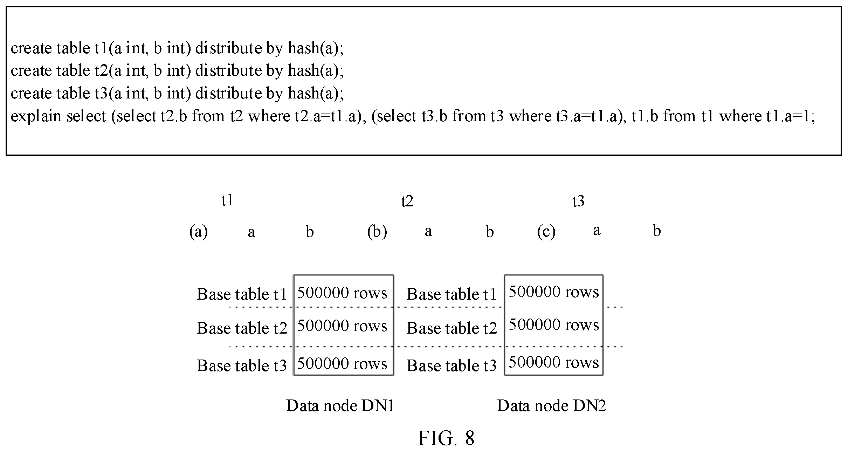

A definition of a base table schema used may be shown in FIG. 8, and three base tables t1, t2, and t3 are included in the example. The base table t1 includes a total of two columns a and b, and the column a is a distribution key in the table t1. The base table t2 includes a total of two columns a and b, and the column a is a distribution key in the table t2. The base table t3 includes a total of two columns a and b, and the column a is a distribution key in the table t3. Each of the three base tables includes 1000000 rows of data, distributed on two data nodes DN1 and DN2, with 500000 rows of data on each data node. A used query statement includes two single-level subqueries. Semantics of a parent query statement is to obtain, from the table t1, a value in the column b in data in which a value in the column a is 1, semantics of a first subquery is to obtain, from the table t2, data in which a value in the column a is the same as the value in the column a in the table t1 in the parent query, and semantics of a second subquery is to obtain, from the table t3, a value in the column b in data in which a value in the column a is the same as the value in the column a in the table t1 in the parent query.

When a database optimizer generates an execution plan before subquery parameter passing is used, for the first subquery, a Seq Scan operator is first used to perform a full table scan on t2, and then a Broadcast operator is used to send scanned data to all data nodes DNs. After each DN receives the data, a Materialize operator stores the data in a memory, and finally a Result operator performs a predicate filtering operation. The same applies to the table t3 in the first subquery. Because all data in the tables t2 and t3 needs to be passed to an upper-level operator, a large quantity of resources are consumed, resulting in very low execution plan efficiency.

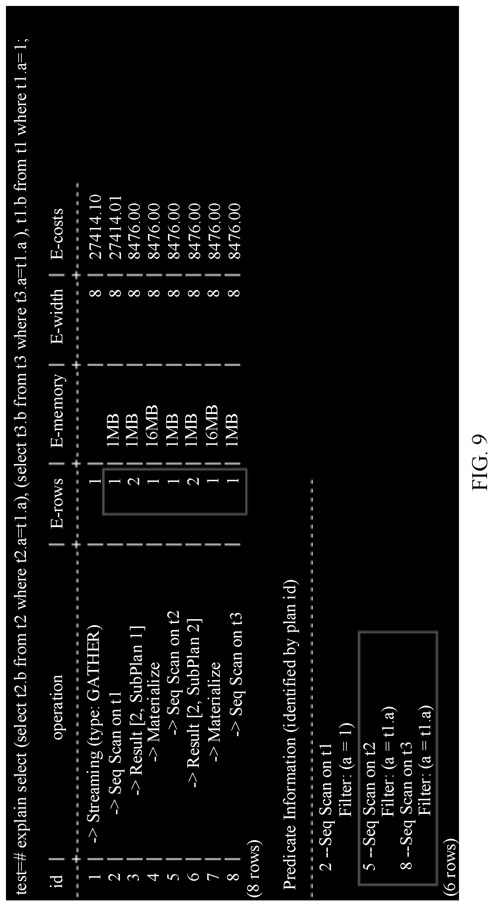

It should be noted that all of predicate conditions in the two subqueries and a predicate condition in the parent query are the column a, and are consistent with the distribution key in the base table. Therefore, the predicate condition in the parent query may be pushed down to the two subqueries. An execution plan generated by the database optimizer after subquery parameter passing is used is shown in FIG. 9. For the first subquery, in a process in which the table t2 is scanned by using the Seq Scan operator, the predicate filtering operation is synchronously performed, and only data that meets the predicate condition is passed to the upper-level operator. The same applies to the table t3 in the second subquery. In this way, an amount of data processed by the upper-level operator is one piece of data. Compared with those for the 1000000 pieces of data, occupied resources are greatly reduced, thereby greatly improving execution performance.

### 4. Two multi-level subqueries

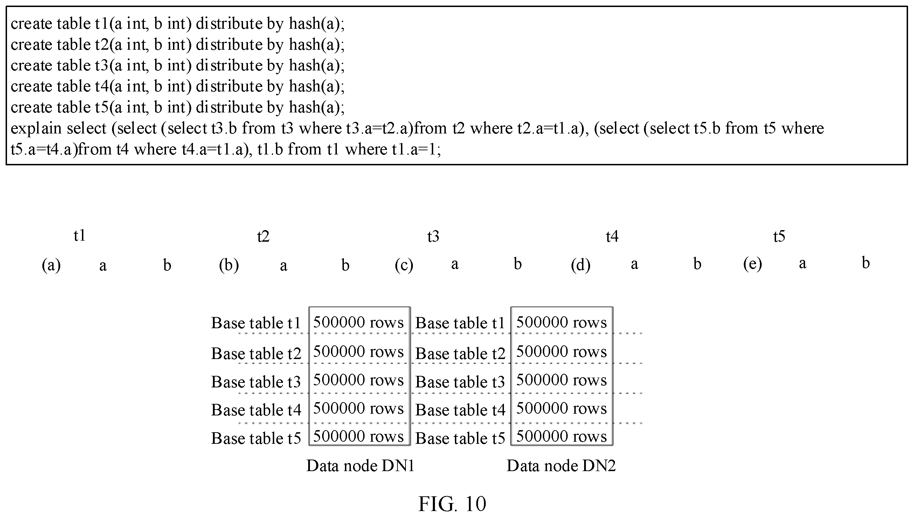

A definition of a base table schema used may be shown in FIG. 10, and five base tables t1, t2, t3, t4, and t5 are included in the example. Each base table includes two columns a and b, and the column a is a distribution key in the table. Each of the five base tables includes 1000000 rows of data, distributed on two data nodes DN1 and DN2, with 500000 rows of data on each data node. A used query statement includes two multi-level subqueries. In a first subquery, semantics of a first-level subquery is to obtain, from the table t2, data in which a value in the column a is the same as a value in the column a in the table t1 in a parent query, and semantics of a second-level subquery is to obtain, from the table t3, a value in the column b in data in which a value in the column a is the same as the value in the column a in the table t2 in the first-level subquery. In a second subquery, semantics of a first-level subquery is to obtain, from the table t4, data in which a value in the column a is the same as the value in the column a in the table t1 in the parent query, and semantics of a second-level subquery is to obtain, from the table t5, a value in the column b in data in which a value in the column a is the same as the value in the column a in the table t4 in the first-level subquery.

When a database optimizer generates an execution plan before subquery parameter passing is used, in the first subquery, for the second-level subquery, a Seq Scan operator is first used to perform a full table scan on the table t3, and then a Broadcast operator is used to send scanned data to all data nodes DNs. After each DN receives the data, a Materialize operator stores the data in a memory, and finally a Result operator performs a predicate filtering operation. The same applies to the first-level subquery. In the second subquery, for the second-level subquery, a Seq Scan operator is first used to perform a full table scan on the table t5, and then a Broadcast operator is used to send scanned data to all data nodes DNs. After each DN receives the data, a Materialize operator stores the data in a memory, and finally a Result operator performs a predicate filtering operation. The same applies to the first-level subquery.

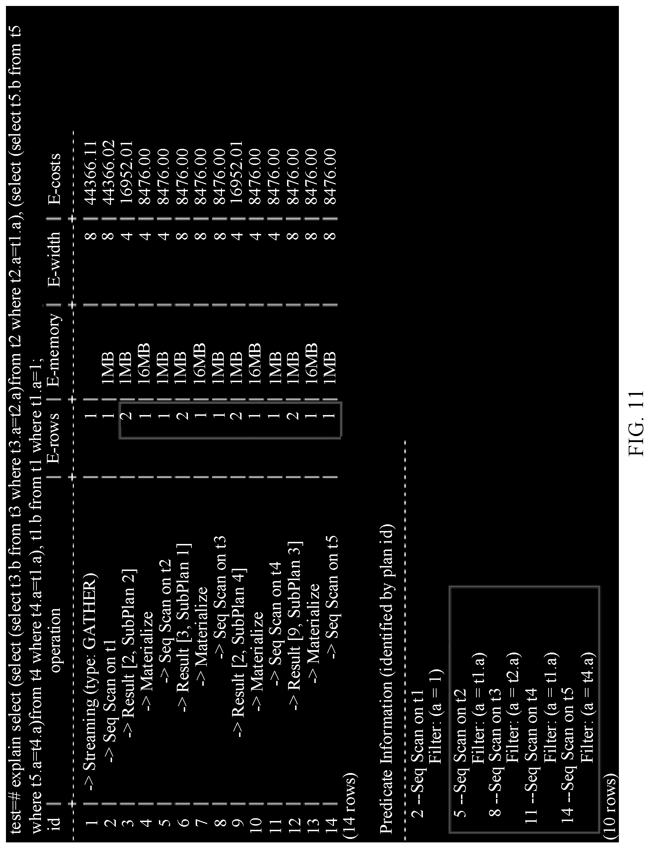

It should be noted that all of predicate conditions in the two multi-level subqueries and a predicate condition in the parent query are the column a, and are consistent with the distribution key in the base table. Therefore, the predicate condition in the parent query may be pushed down to the two multi-level subqueries. An execution plan generated by the database optimizer after subquery parameter passing is used is shown in FIG. 11. In the first subquery, for the first-level subquery, in a process in which the table t3 is scanned by using the Seq Scan operator, the predicate filtering operation is synchronously performed, and only data that meets the predicate condition is passed to an upper-level operator. The same applies to the first-level subquery. In the second subquery, for the first-level subquery, in a process in which the table t5 is scanned by using the Seq Scan operator, the predicate filtering operation is synchronously performed, and only data that meets the predicate condition is passed to an upper-level operator. The same applies to the first-level subquery. In this way, in each subquery, an amount of data processed by the upper-level operator is one piece of data. Compared with those for the 1000000 pieces of data, occupied resources are greatly reduced, thereby greatly improving execution performance.

It should be understood that in a possible implementation, when determining whether to push down the parent query, the CN checks whether the statement includes parameter passing information, or whether predicate conditions and distribution information in the parent query and the subquery in the statement are consistent. The parameter passing information may be referred to as indication information. The indication information indicates to push down the first predicate condition to the second predicate condition included in the second query. If there is parameter passing pull-up information or predicate distribution is consistent, a parameter passing path is directly generated. Otherwise, a Broadcast operator is added before the parameter passing path is generated. The CN converts the path into an execution plan. An executor performs execution based on the generated execution plan, and returns an execution result.

303: Send the third query to a data node on which the second table is deployed.

It should be understood that as described above, the first query may be a subquery of another query (for example, the fourth query in this embodiment of this application), the fourth query includes a fourth predicate condition, and the fourth predicate condition indicates data, in a fourth data range of a third table, that meets a third constraint. It should be understood that the third table and the first table or the second table may be a same table.

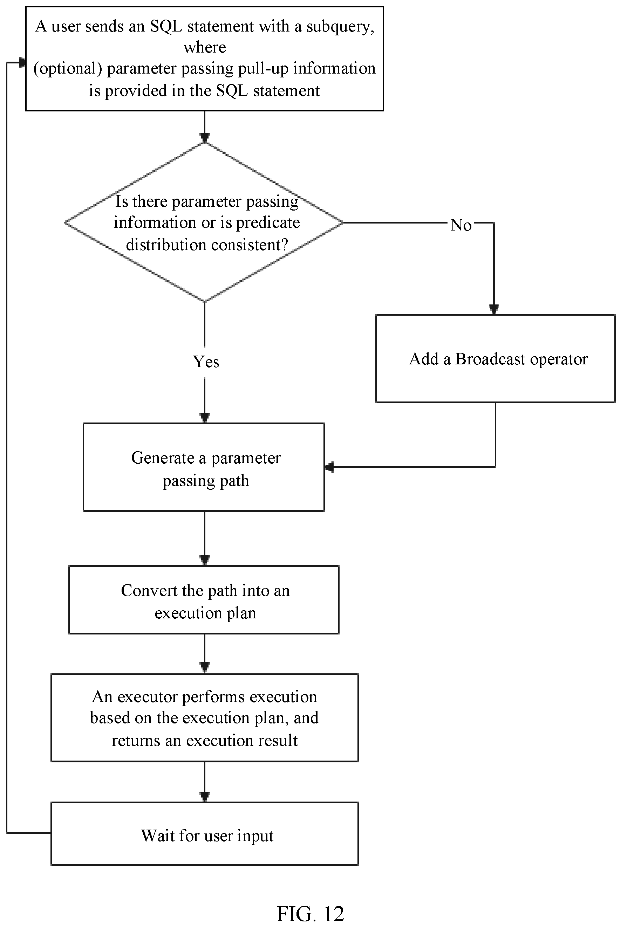

FIG. 12 is a schematic flowchart of a data processing method according to an embodiment of this application. The method includes the following steps.

A user sends an SQL statement with a subquery to a coordinator node CN.

The CN checks whether the statement includes parameter passing information, or whether predicate conditions and distribution information in the parent query and the subquery in the statement are consistent.

If there is parameter passing pull-up information or predicate distribution is consistent, a parameter passing path is directly generated. Otherwise, a Broadcast operator is added before the parameter passing path is generated.

The CN converts the path into an execution plan.

An executor performs execution based on the generated execution plan, and returns an execution result.

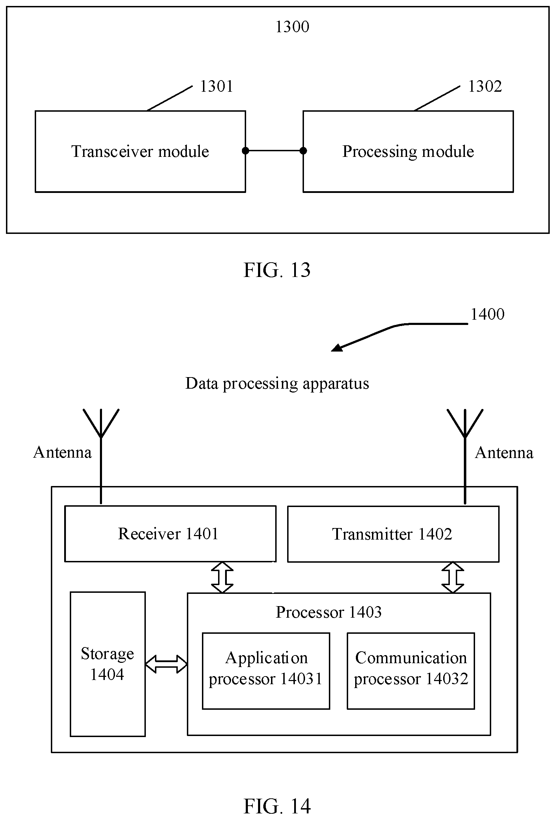

FIG. 13 is a diagram of a structure of a data processing apparatus according to an embodiment of this application. As shown in FIG. 13, the data processing apparatus 1300 provided in this embodiment of this application includes the following modules:

A transceiver module 1301 is configured to obtain a first query and a second query, where the second query is a subquery of the first query, the first query includes a first predicate condition, the second query includes a second predicate condition, the first predicate condition indicates data, in a first data range of a first table, that meets a first constraint, the second predicate condition indicates data, in a second data range of a second table, whose relationship with data in the first data range meets a second constraint, and each of the first data range and the second data range corresponds to a distribution key in the table.

The transceiver module 1301 is further configured to send the third query to a data node on which the second table is deployed.

For specific descriptions of the transceiver module 1301, refer to the descriptions of steps 301 and 303 in the foregoing embodiment. Details are not described herein.

A processing module 1302 is configured to obtain a third query based on the first query and the second query, where the third query includes a third predicate condition, the third predicate condition indicates data, in the second data range of the second table, whose relationship with data in a third data range of the first table meets the second constraint, and the data in the third data range is data, in the first data range, that meets the first constraint.

For specific descriptions of the processing module 1302, refer to the descriptions of step 302 in the foregoing embodiment. Details are not described herein.

In a possible implementation, the first query is a subquery of a fourth query, the fourth query includes a fourth predicate condition, and the fourth predicate condition indicates data, in a fourth data range of a third table, that meets a third constraint.

In a possible implementation, the processing module 1302 is specifically configured to:
obtain the third query based on obtained indication information, the first query, and the second query, where the indication information indicates to push down the first predicate condition to the second predicate condition included in the second query.

In a possible implementation, the transceiver module 1301 is further configured to:
receive data, in the second table, that is passed by the data node based on the third query.

In a possible implementation, the first data range is a column in the first table, and the second data range is a column in the second table.

The following describes a data processing apparatus according to an embodiment of this application. FIG. 14 is a diagram of a structure of a data processing apparatus according to an embodiment of this application. Specifically, the data processing apparatus 1400 includes a receiver 1401, a transmitter 1402, a processor 1403, and a storage 1404 (there may be one or more processors 1403 in the data processing apparatus 1400, and one processor is used as an example in FIG. 14). The processor 1403 may include an application processor 14031 and a communication processor 14032. In some embodiments of this application, the receiver 1401, the transmitter 1402, the processor 1403, and the storage 1404 may be connected through a bus or in another manner.

The storage 1404 may include a read-only memory and a random access memory, and provide instructions and data to the processor 1403. A part of the storage 1404 may further include a non-volatile random access memory (non-volatile random access memory, NVRAM). The storage 1404 stores a processor and operation instructions, an executable module or a data structure, a subset thereof, or an extended set thereof. The operation instructions may include various operation instructions for implementing various operations.

The processor 1403 controls an operation of the data processing apparatus. In specific application, components of the data processing apparatus are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 1403 or may be implemented by the processor 1403. The processor 1403 may be an integrated circuit chip and has a signal processing capability. In an implementation process, the steps in the foregoing methods may be implemented by using an integrated logic circuit of hardware in the processor 1403 or by using instructions in a form of software. The processor 1403 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the storage 1404, and the processor 1403 reads information in the storage 1404, and completes execution actions of the CN or the DN in the foregoing methods in combination with the hardware in the processor 1403.

The receiver 1401 may be configured to: receive entered digital or character information, and generate signal input related to related settings and function control of the data processing apparatus. The transmitter 1402 may be configured to output digital or character information through a first interface. The transmitter 1402 may be further configured to send instructions to a disk group through the first interface, to modify data in the disk group.

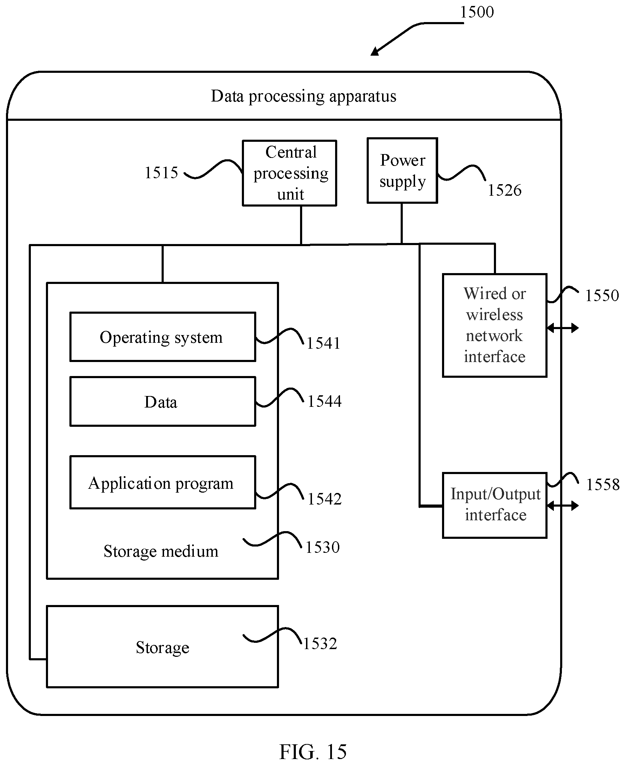

An embodiment of this application further provides a data processing apparatus. FIG. 15 is a diagram of a structure of a data processing apparatus according to an embodiment of this application. The data processing apparatus 1500 may differ greatly because of a difference in configuration or performance, and may include one or more central processing units (central processing units, CPUs) 1515 (for example, one or more processors), a storage 1532, and one or more storage media 1530 (for example, one or more mass storage devices) for storing an application program 1542 or data 1544. The storage 1532 and the storage medium 1530 may be a temporary storage or persistent storage. A program stored in the storage medium 1530 may include one or more modules (not shown in the figure), and each module may include a series of instruction operations on the data processing apparatus. Further, the central processing unit 1515 may be configured to: communicate with the storage medium 1530, and perform the series of instruction operations in the storage medium 1530 on the data processing apparatus 1500.

The data processing apparatus 1500 may further include one or more power supplies 1526, one or more wired or wireless network interfaces 1550, and one or more input/output interfaces 1558, or one or more operating systems 1541, for example, Windows Server^{™}, Mac OS X^{™}, Unix^{™}, Linux^{™}, and FreeBSD^{™}.

In this embodiment of this application, the central processing unit 1515 is configured to perform execution actions of the CN or the DN in the foregoing embodiments.

An embodiment of this application further provides a computer program product. When the computer program product is run on a computer, the computer is enabled to perform the steps performed by the data processing apparatus.

An embodiment of this application further provides a computer-readable storage medium. The computer-readable storage medium stores a program used for signal processing. When the program is run on a computer, the computer is enabled to perform the steps performed by the data processing apparatus.

The data processing apparatus, the data processing apparatus, or the terminal device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the data processing apparatus performs the data processing method described in the foregoing embodiments, or a chip in the data processing apparatus performs the data processing method described in the foregoing embodiments. Optionally, the storage unit is a storage unit in the chip, for example, a register or a cache. Alternatively, the storage unit may be a storage unit that is in the wireless access device and that is outside the chip, for example, a read-only memory (read-only memory, ROM) or another type of static storage device that can store static information and instructions, or a random access memory (random access memory, RAM).

Any processor described above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located at one position, or may be distributed on a plurality of network units. Some or all of the modules may be selected based on actual requirements to achieve the objectives of the solutions in embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or certainly, may be implemented by dedicated hardware, including an application-specific integrated circuit, a dedicated CPU, a dedicated storage, a dedicated component, and the like. Generally, any function performed by a computer program can be easily implemented by using corresponding hardware. In addition, a specific hardware structure used to achieve a same function may be in various forms, for example, in a form of an analog circuit, a digital circuit, or a dedicated circuit. However, for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk, a ROM, a RAM, a magnetic disk, or an optical disc, and includes several instructions for enabling a computer device (which may be a personal computer, a data processing apparatus, a network device, or the like) to perform the methods in embodiments of this application.

All or some of the foregoing embodiments may be implemented by using software, hardware, firmware, or any combination thereof. When software is used for implementation, all or some of the foregoing embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, data processing apparatus, or data center to another website, computer, data processing apparatus, or data center in a wired (for example, a coaxial cable, an optical fiber, or a digital subscriber line (DSL)) or wireless (for example, infrared, radio, or microwave) manner. The computer-readable storage medium may be any usable medium that can be stored in a computer, or a data storage device, for example, a data processing apparatus or a data center, into which one or more usable media are integrated. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A data processing method, wherein the method comprises:
obtaining a first query and a second query, wherein the second query is a subquery of the first query, the first query comprises a first predicate condition, the second query comprises a second predicate condition, the first predicate condition indicates data, in a first data range of a first table, that meets a first constraint, the second predicate condition indicates data, in a second data range of a second table, whose relationship with data in the first data range meets a second constraint, and each of the first data range and the second data range corresponds to a distribution key in the table;
obtaining a third query based on the first query and the second query, wherein the third query comprises a third predicate condition, the third predicate condition indicates data, in the second data range of the second table, whose relationship with data in a third data range of the first table meets the second constraint, and the data in the third data range is data, in the first data range, that meets the first constraint; and
sending the third query to a data node on which the second table is deployed.

2. The method according to claim 1, wherein the first constraint indicates data, in the first data range of the first table, that is equal to a preset constant.

3. The method according to claim 1 or 2, wherein the third query does not comprise the first query.

4. The method according to any one of claims 1 to 3, wherein the first query is a subquery of a fourth query, the fourth query comprises a fourth predicate condition, and the fourth predicate condition indicates data, in a fourth data range of a third table, that meets a third constraint.

5. The method according to any one of claims 1 to 4, wherein the obtaining the third query based on the first query and the second query comprises:
obtaining the third query based on obtained indication information, the first query, and the second query, wherein the indication information indicates to push down the first predicate condition to the second predicate condition comprised in the second query.

6. The method according to any one of claims 1 to 5, wherein the method further comprises:
receiving data, in the second table, that is passed by the data node based on the third query.

7. The method according to any one of claims 1 to 6, wherein the first data range is a column in the first table, and the second data range is a column in the second table.

8. A database system, comprising a coordinator node and a data node, wherein
the coordinator node is configured to perform the method according to any one of claims 1 to 7; and
the data node is configured to: scan the second table based on the third query, to obtain data in the second table; and
pass the data in the second table to the coordinator node.

9. A data processing apparatus, wherein the apparatus comprises:
a transceiver module, configured to obtain a first query and a second query, wherein the second query is a subquery of the first query, the first query comprises a first predicate condition, the second query comprises a second predicate condition, the first predicate condition indicates data, in a first data range of a first table, that meets a first constraint, the second predicate condition indicates data, in a second data range of a second table, whose relationship with data in the first data range meets a second constraint, and each of the first data range and the second data range corresponds to a distribution key in the table; and
a processing module, configured to obtain a third query based on the first query and the second query, wherein the third query comprises a third predicate condition, the third predicate condition indicates data, in the second data range of the second table, whose relationship with data in a third data range of the first table meets the second constraint, and the data in the third data range is data, in the first data range, that meets the first constraint, wherein
the transceiver module is further configured to send the third query to a data node on which the second table is deployed.

10. The apparatus according to claim 9, wherein the first constraint indicates data, in the first data range of the first table, that is equal to a preset constant.

11. The apparatus according to claim 9 or 10, wherein the third query does not comprise the first query.

12. The apparatus according to any one of claims 9 to 11, wherein the first query is a subquery of a fourth query, the fourth query comprises a fourth predicate condition, and the fourth predicate condition indicates data, in a fourth data range of a third table, that meets a third constraint.

13. The apparatus according to any one of claims 9 to 12, wherein the processing module is specifically configured to:
obtain the third query based on obtained indication information, the first query, and the second query, wherein the indication information indicates to push down the first predicate condition to the second predicate condition comprised in the second query.

14. The apparatus according to any one of claims 9 to 13, wherein the transceiver module is further configured to:
receive data, in the second table, that is passed by the data node based on the third query.

15. The apparatus according to any one of claims 9 to 14, wherein the first data range is a column in the first table, and the second data range is a column in the second table.

16. A computer storage medium, wherein the computer storage medium stores one or more instructions, and when the instructions are executed by one or more computers, the one or more computers are enabled to perform an operation in the method according to any one of claims 1 to 7.

17. A computer program product, comprising computer-readable instructions, wherein when the computer-readable instructions are run on a computer device, the computer device is enabled to perform the method according to any one of claims 1 to 7.

18. A system, comprising at least one processor and at least one storage, wherein the processor and the storage are connected and communicate with each other through a communication bus;
the at least one storage is configured to store code; and
the at least one processor is configured to execute the code, to perform the method according to any one of claims 1 to 7.

19. A chip, comprising at least one processing unit and an interface circuit, wherein the interface circuit is configured to provide program instructions or data to the at least one processing unit, and the at least one processing unit is configured to execute the program instructions to implement the method according to any one of claims 1 to 7.
